Europäisches Patentamt

(19) European Patent Office

Office européen des brevets

(11) Publication number: **0 448 260 A2**

(12) **EUROPEAN PATENT APPLICATION**

(21) Application number: **91301953.5**

(22) Date of filing: **08.03.91**

(51) Int. Cl.[5]: **B60R 1/08, G02F 1/157**

(30) Priority: **09.03.90 US 491447**

(43) Date of publication of application:
**25.09.91 Bulletin 91/39**

(84) Designated Contracting States:
**DE FR GB IT**

(71) Applicant: **DONNELLY CORPORATION**
**414 East Fortieth Street**
**Holland Michigan 49423 (US)**

(72) Inventor: **Lynam, Niall R.**
**248 Foxdown**
**Holland, Michigan 49424 (US)**

(74) Representative: **Sheard, Andrew Gregory et al**
**Kilburn & Strode 30, John Street**
**London WC1N 2DD (GB)**

(54) **Electrochromic or electrochemichromic rearview mirror assembly.**

(57) A reduced first surface reflectivity electrochromic or electrochemichromic rearview mirror assembly is disclosed which provides improved glare reduction and substantially less noticeable double imaging. The assembly includes an anti-reflective layer or coating on the outermost, front surface of the front glass substrate/panel. The coating can be a single thin film or a multiple layer thin film stack of suitable durability and index of refraction. Alternatively, a gradient refractive index layer produced by surface leaching, dip coating and heating, or ion implantation may be used. The electrochemichromic mirror assembly can have a laminate front glass where unwanted total reflection and double imaging could otherwise be pronounced because of opportunities for nonparallel attachment of the multiple glass substrates.

FIG. 3

# ELECTROCHROMIC OR ELECTROCHEMICHROMIC REARVIEW MIRROR ASSEMBLY

This invention relates to glare reducing rearview mirror assemblies for use in vehicles and, more particularly, to an electrochromic and/or electrochemichromic rearview mirror assembly having spaced apart substrate panels which may provide reduced glare reflection and thus may improve glare reduction, as well as seeking to achieve substantially less noticeable double imaging in both interior and exterior vehicle applications.

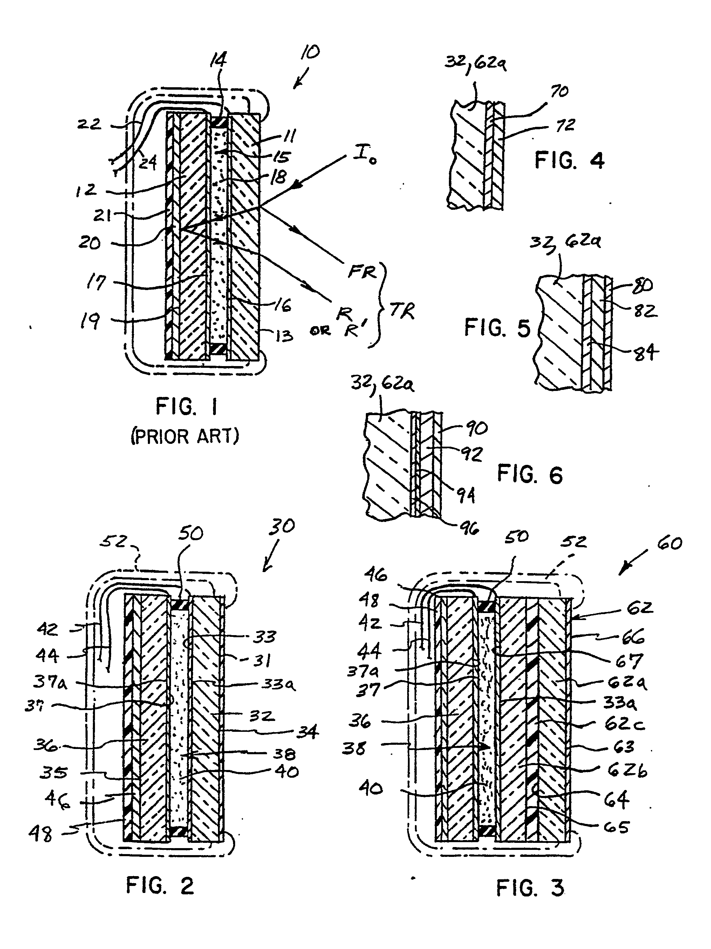

Recent advancements in rear vision systems for vehicles include electro-optic rearview mirrors having an electrically activated medium which darkens to reduce glare in response to bright lights sensed from the rear of the vehicle. Although single substrate forms of such rearview mirrors are known, a more typical, conventionally known version is referenced as 10 in accompanying Figure 1. This prior art rearview mirror 10 consists of two planar substrates (or panels) 11, 12 which are usually formed from glass although other optically transparent panels such as polycarbonate, acrylic and the like can also be used. Panels 11, 12 are spaced apart by a sealing material 14 defining a cell cavity 15 between the rear surface of front panel 11 and the front surface of rear panel 12. Transparent, electrically conductive coatings 16, 17, usually indium-tin oxide or an equivalent, are typically coated on those facing surfaces prior to assembly. In addition, the rearmost surface 19 of substrate 12 typically includes a reflector coating 20 of silver, aluminium, chromium or similar metal, followed by a scatter preventing layer 21 of tape, plastisol or the like.

In this assembly, the cavity 15 is typically filled with an electro-optic material 18 such as a liquid crystal, liquid or gel electrochromic or like medium. When no electrical voltage is applied across electrical leads 22, 24 (which are connected to conductive layers 16, 17) the electro-optic material is optically clear and transparent. Hence, incident light ($I_o$) enters through substrate panel 11, passes through the cell cavity 15, the electro-optic material 18, the transparent conductive coatings 16, 17, rear panel 11 and is reflected off layer 20 after which it is retransmitted through the electro-optic material 18, rear and front panels 12, 11 and coatings 16, 17 to form a reflected image R. Typically, the reflected image R is 50 to 90% of the incident light intensity $I_o$, depending on the nature and quality of reflective layer 20. However, when a suitable electric voltage is applied to leads 22, 24, the electro-optic medium 18 in cavity 15 is darkened such that incident light $I_o$ is attenuated by that medium, is reflected off layer 20, and is further attenuated in intensity during its second pass through material 18 and out through front panel 11 to form dimmed image R'. Thus, when a voltage is applied to electro-optic material 18, the attenuated reflected image R' is usually 1 to 5% of the intensity of incident light $I_o$.

In addition to the principal full or dimmed reflected image R or R', an observer of the rearview mirror assembly 10 will also see a second image FR due to reflection from a front surface 13 of the front substrate 11. The first surface reflection FR is a natural consequence of the difference between the refractive index of the incident medium, in this case air with an index of 1, and the refractive index of the material from which the surface 13 is composed, in this case soda lime glass having a refractive index of about 1.52 (measured at sodium D line). The reflectivity R for a bare dielectric surface such as soda lime glass at normal (as opposed to oblique) incidence is given by the Fresnel coefficient:

$$R = 1-T = \frac{(n_o-n_s)^2}{(n_o+n_s)^2}$$

where $n_o$ is the refractive index of the incident medium, which is usually air, and $n_s$ is the refractive index of the substrate. If light is obliquely incident, then the above equation still applies if the appropriate effective index is used in place of $n_o$ and $n_s$. Thus, first surface reflection FR from such a glass substrate is about 4% using the above equation. Total reflectivity TR as seen by an observer of assembly 10 will include the sum of the first surface reflection FR and either the full or dimmed mirror reflection R or R', depending on whether the electro-optic mirror is inactivated or dimmed.

Use of known electro-optic rearview mirrors, such as assembly 10, creates three problems with respect to the viewed reflection. First, no matter how dark the electro-optic material becomes, total reflectivity TR cannot be less than 4%, i.e., the 4% from first surface reflection FR. Hence, very intense headlights or similar intense light sources around the vehicle in which the rearview mirror system is being used, have the potential to continue to at least partially produce vision impairing glare despite total elimination of the reflectance from the mirror reflector 20 by dimming the electro-optic material 18 in the cavity 15.

Secondly, if the front surface 13 and the rear surface 19 (of the substrate 12) on which reflector layer 20 is placed are not perfectly parallel, then the first surface reflectance image FR will not superimpose with the reflected image from mirror surface 20. Thus, a double image is formed when an observer would see both R or R' and FR. This double image will be particularly noticeable when the two images are close in intensity, i.e., when FR is about 4% and when R' is between 1 and 5%, as is common when the electro-optic material 18 is activated to its dimmed state.

Thirdly, if the glass substrates 11, 12 are relatively thick, e.g., 2 millimetres or so, then the double image of FR and R or R' will be particularly discernible when the assembly is viewed from an oblique angle.

Of course, other surfaces such as the rear surface of front panel 11 and the front surface of rear panel 12 can potentially contribute reflections in addition to first surface reflection FR and mirror reflection R or R'. However, the refractive index of electro-optic material 18, along with the refractive index of any coatings 16, 17 used on those additional surfaces, can be specified to be sufficiently close to that of substrates 11, 12 so as to sufficiently weaken the intensity of such additional reflectance to avoid problems from additional double imaging or significant contribution to overall total reflectance TR.

In addition it has been discovered that the problems mentioned above are more pronounced when the front substrate panel 11 is replaced with a laminate front assembly for safety and other reasons there are described in U.S. patent application Serial No. 07/464,888, filed (on January 16, 1990). In such an assembly, inclusion of two adhered or laminated substrate panels in front of the electro-optic medium creates an additional opportunity for slight misalignment or nonparallelism between the front surface of the assembly and the mirror reflectance surface somewhere to the rear in the assembly. Hence, the problems of less efficient glare reduction and double imaging can be even more pronounced.

In addition, inefficient glare reduction and double imaging can be more pronounced in electrochromic or electrochemichromic mirror assemblies that use a liquid or gel medium in the cavity between the spaced substrates as in Figure 1 when contrasted with solid-state, single substrate electrochromic assemblies or light scattering liquid crystal mirror assemblies. In the solid-state, single substrate assemblies, the parallel relationship of the front surface and the rear reflector surface can be easily controlled when forming the single substrate. In the liquid crystal assemblies, light is scattered when the liquid crystal layer is activated, as opposed to being absorbed by a darkened layer, tending to reduce the glare and double imaging more naturally.

Prior efforts to solve these glare and double imaging problems have been made such as in Japanese Patent Publication 61-7803 of January 14, 1986, entitled "NONGLARING TYPE REFLECTING MIRROR." Such an assembly provides a prismatic, laminated front glass piece in a liquid crystal mirror assembly where the front surface is purposely set at an angle to the rear surface of the front substrate. In such a case, the front surface reflected image FR is diverted at a significant angle with respect to the principal reflected image R to try to avoid the problem of double imaging described above. This concept of purposeful divergence of reflected images using a prismatic element is well-known in mechanical day/night type rearview mirrors.

However, the prismatic front piece in electro-optic mirror assemblies has several drawbacks. Such prismatic front piece assemblies are difficult to use on outside mirrors due to the viewing angles involved and increase the overall device weight and thickness of the mirror assembly due to the need for a wedge-shaped glass element. In addition, prismatic front pieces are impractical for use on mirrors of compound curvature such as convex outside mirrors now commonly installed on vehicles for increased viewing range, and are very expensive to manufacture, especially for large area mirrors such as outside truck mirrors, and for mirrors requiring a variety of mirror shapes. Varying shapes would require a wide range of individual prismatic elements and necessitate large fabrication costs.

Accordingly, there is a need for an improved electro-optic rearview mirror assembly, especially of the electrochemichromic variety, where the problems of low end reflectance limitations and of double imaging found in prior known mirror assemblies can be reduced or even eliminated.

According to a first aspect of the present invention there is provided an electrochromic and/or electrochemichromic mirror assembly comprising:

first and second spaced apart elements, at least the first element being optically transparent, each element having a front and rear surface so defining a space between the rear surface of the first element and the front surface of the second element;

an electrochromic and/or electrochemichromic medium contained in the space whose light transmittance is variable upon the variation and/or application of an electric field applied thereto;

means for applying an electric field to the electrochromic and/or electrochemichromic medium to allow variation in the light transmittance of the medium;

one surface of the second element having a reflective coating adapted to reflect light incident thereon through both the first element and the electrochromic and/or electrochemichromic medium; and

anti-reflective means being provided on the front surface of the front element.

The mirror assembly may thus reduce first surface reflectivity (i.e. reflection from the front surface of the front element) which may thus result in lower total reflectivity and a reduction in double imaging.

3

In use, the first and second elements will usually be mounted in a mirror case. The second element need not be transparent, since the reflective coating may provide the means for applying any electric field to the medium. However, in a preferred embodiments the second element is optically transparent, like the first element, and in which case the reflective coating may then be provided on the rear surface of the second element.

The anti-reflective means may comprise one or more films, coatings or layers. These will suitably be optically transparent.

The first and/or second elements are preferably glass, such as soda lime glass, although other optically transparent materials can be employed, such as polymers such as polycarbonates and acrylic polymers and perspex.

The anti-reflective means suitably comprises a plurality of coatings or layers, preferably from 2 to 4 coatings or layers. These may be formed by either contacting the element with an appropriate substance (for example to then form a layer) or by applying an appropriate substance to the element (such as to form a coating).

The anti-reflective means suitably includes at least one layer comprising an inorganic metallic fluoride, for example magnesium fluoride and/or cryolite. If more than one layer is provided, then other layers suitably comprise one or more oxides. It is preferred that at least one layer has a refractive index which is between that of air (which has a value of 1) and the element (in the case of soda lime glass, 1.52).

The anti-reflective means may thus comprise two layers, such as a first outer layer which will suitably have an index of refraction that is lower than a second, inner layer. For example, the first outer layer may have an index of refraction of about 1.38, and the second inner may have an index of refraction of about 1.7. This may be achieved if the first outer layer comprises an inorganic metallic fluoride compound as discussed above, such as magnesium fluoride, and the second inner layer comprises an inorganic oxide, such as silicon monoxide ($SiO_x$). The anti-reflective means may thus comprise a multiple of layers, such as multiple layer coating (such as three layers). In the case of three layers, then when progressing inwardly from the outer layer towards the front surface of the first element then the thickness of the first and/or third layers are suitably less than the second layer. The second and third layers may each have different indices of refraction and it is preferred that the index of refraction for the first layer is lower than the second layer. It is also preferred that the third layer has an index of refraction that is intermediate (or between) the indices of the first and second layers.

Thus, in a preferred embodiment, the anti-reflective means comprises three layers of the following compositions:

(1) the first layer comprises an inorganic metallic fluoride compound, such as magnesium fluoride;

(2) the second layer comprises a metal oxide, where the metal is preferably a lanthanide or transition metal, such as zirconium oxide, neodymium oxide, tantalum oxide, indium and/or titanium dioxide (tantalum oxide being preferred); and

(3) the third layer comprising an inorganic metallic fluoride compound, or an oxide, for example cerium fluoride, silicon oxide, lanthanum oxide, thorium oxide and/or neodymium fluoride (lanthanum oxide being preferred).

Thus the first layer may have an index of refraction of about 1. 38, the second layer having a index of refraction of from 1. 9 to 2. 3 and the third layer having an index of refraction of from 1. 8 to 1.85.

Of course, it will be appreciated that the anti-reflective means may comprise a multiple layer coating that can have four layers. The compositions of each of these layers are suitably the same as those discussed for one, two or three layers. However, where four layers are present it is preferred that the first, third and fourth layers (when progressing inwardly from the outer layer towards the from surface of the first element) have thicknesses less than the second layer. It is also preferred that the first and third layers have indices of refraction less than the second and fourth layers.

The layers may alternate between, for example, an inorganic metallic fluoride compound and an oxide as discussed previously. For example, the first and third layer may comprise magnesium fluoride and the second and fourth layer may comprise zirconium oxide.

The anti-reflection means may comprise a gradient refractive index film. This may be provided on the rear surface of the first element. However, it should be appreciated that the anti-reflection means may be provided on not only the front surface of the first element, but also the rear surface thereof.

The anti-reflective means may thus comprise a surface leached layer having an index of refraction between that of air and the element, such as soda lime glass. Such a layer may be a porous silica-rich region, which may be formed by acid etching. It will suitably have an index of refraction between 1.35 and 1.45.

The gradient refractive index layer may thus comprise a porous-skeletonised surface coating on the element (e.g. glass) which may be formed from a dispersion which includes a solution comprising at least one metallo-organic compound and at least one organic polymer. The dispersion may be applied by dip application followed by heating to drive off the solvent. The organic components and the organic polymer may thus leave a surface coating in the form of an inorganic oxide film.

4

Alternatively, the gradient refractive index layer may be formed or induced on the first element (such as the front surface of a first glass element) by argon-ion implantation.

It is preferred that the first element is a laminate (or a laminate assembly). Suitably the laminate comprises a plurality (such as a pair) of optically transparent panels or layers. These may be adhered to one another by a light transmitting intermediate layer. Generally each of the panels or layers will have front and rear surfaces which are parallel to one another.

The panels or layers that can be used in the laminate suitably comprise glass, for example soda lime glass. The intermediate layer preferably comprises a polymer layer or a transparent adhesive layer (which will suitably have a moderate to low modulus of elasticity).

In preferred embodiments the first element laminate will be provided with ultra-violet radiation reducing means in order to reduce the degradation, by ultra-violet radiation, of the electrochromic and/or electrochemichromic medium.

Thus the invention in a preferred embodiment relates to a (reduced first surface reflectivity) electrochromic and/or electrochemichromic mirror assembly (e.g. a rearview mirror assembly) comprising:

first and second spaced apart optically transparent elements (which may be mounted in a mirror case), the elements each having a front and rear surface so defining a space between the rear surface of the first element and the front surface of the second element;

the first element being a laminate assembly comprising a pair of optically transparent panels adhered to one another by a highly light transmitting interlayer therebetween, the panels each having front and rear surfaces which are generally parallel to one another on each element;

and electrochromic and/or electrochemichromic medium confined in the space whose light transmittance is variable upon the application of electric field thereto;

means for applying an electric filed to the medium to cause variation in the light transmittance of the medium;

a reflective coating on one surface of the second element which is adapted to reflect light incident thereon through both the first element and the electrochromic and/or electrochemichromic medium; and

anti-reflective means on the front surface of the first element.

The latter feature is suitably capable of substantially reducing reflection from the front surface of the first element, so that the assembly may provide lower total reflectivity an reduce double imaging.

The reflective coating (such as a reflective layer) is suitably metallic, for example it may comprise aluminium or silver or an alloy of either one or both of these metals, for example an alloy of copper and silver. The reflective coating may be provided on the front surface of the second element and may therefore be in contact with the medium so that it is part of the means for applying an electric field to the medium.

However, it will be realised that the reflective coating may also be placed on the rear surface of the second element.

The electrochromic and/or electrochemichromic medium is suitably a solution which comprises 0.05M benzylviologen tetrafluoroborate, 0.05M 5,10-dihydro-5,10-dimethylphenazine, and 0.05M tetrabutylammonium tetrafluoroborate dissolved in propylene carbonate. It is preferred that the anti-reflective means comprises at least one layer of an inorganic metal fluoride compound, for example cryolite or (and in particular) magnesium fluoride. This layer is preferably the outer layer, should more than one layer be present. This layer is suitably from 1,000 to 1,100 Angstroms. The thickness of the layer can also be given in terms of optical wavelength, and in which case this layer suitably has an optical thickness of about $\frac{1}{4}$ wavelength (lambda/4). Generally lambda will be from 500 to 600 nm in use, for example about 560 nm.

If the anti-reflective means comprises only two layers, then it is preferred that the second layer is silicon oxide (which has a refractive index of 1.70). The silicon oxide layer will suitably be from 800 to 900 Angstroms thick.

However, when a plurality of layers are provided, silicon oxide may be replaced (or combined with) one or more metal (such as transition metal or lanthanide) oxides and/or fluorides. In this situation, it is preferred that the total optical wavelength of all of the constituent layers totals approximately one whole wavelength (lambda). Thus, in the case of three layers, there may be provided two layers of total thickness of about $\frac{1}{4}$ wavelength (lambda/4) and one layer of about $\frac{1}{2}$ wavelength (lambda/2).

It will be appreciated that if a layer is provided having an optical thickness of about $\frac{1}{2}$ wavelength, then this layer will usually have a physical thickness greater than any of the other layers, and indeed it is preferred that this ranges from 2,000 to 2,400 Angstroms. Such a layer will preferably have a refractive index of from 1.9 to 2.3. For example, the layer may comprise neodymium oxide, tantalum oxide, indium oxide, titanium oxide and/or (and preferably) zirconium oxide (the latter having a refractive index of 1.95). If a layer is provided of about $\frac{1}{4}$ wavelength (lambda/4) then this suitably has a refractive index of 1.8 to 1.85. In terms of physical thickness, this may range from 700 to 800 Angstroms. The layer may thus preferably comprise cerium fluoride, silicon

oxide, thorium oxide, neodymium fluoride and/or (and preferably) lanthanum oxide (which has a refractive index of 1.84).

It will of course be appreciated that more than three layers can be provided, and any suitable combination of the layers mentioned above, and their constituents, should be acceptable if they can reduce reflection from the front surface of the first element. In some situations it may be preferred to alternate the composition of alternate layers between the compounds mentioned above for making layers of optical thickness of $\frac{1}{2}$ and $\frac{1}{4}$ wavelength. One quarter wavelength optical thickness may also be achieved by using the inorganic metallic fluoride compounds previously mentioned. Thus, in preferred embodiments the anti-reflective means comprises alternate layers of the inorganic metallic fluoride compound with one or more of the compounds that can be used to make a layer of optical thickness of $\frac{1}{2}$ wavelength (for example zirconium oxide).

The present invention thus seeks to provide a reduced first surface reflectivity electrochromic and/or electrochemichromic (e.g. rearview) mirror assembly that may have improved glare reduction through reduced total reflection in the low end, dimmed state and also may have substantially less noticeable double imaging.

In one embodiment the reduced first surface reflectivity electrochromic and/or electrochemichromic rearview mirror assembly has a first and second spaced apart and optically transparent elements, suitably mounted in a mirror case. The elements have respective front and rear surfaces and so define a space between the rear surface of the first element and the front surface of the second element. An electrochromic and/or electrochemichromic medium is placed in (or confined in) this space, the medium having a light transmittance which is variable upon the application of or a variance in, any electric field applied thereto. Means are usually provided for applying an electric field to the electrochromic and/or electrochemichromic medium to vary the light transmittance of the medium. A reflective coating may be provided on one surface of the second element which reflects light incident thereon through the first element and thus electrochromic and/or electrochemichromic medium. An anti-reflective means (e.g. a coating or layer) is provided, such as on the front surface of the first element, for substantially reducing reflection from the front surface of the first element. This may enable the assembly to provide lower total reflectivity and to reduce double imaging.

In preferred embodiments of the invention, the anti-reflective means may be an optical (e.g. light transmissible) layer or coating such as (thin) film, a multiple layer coating, or a gradient refractive index film. For example, the optical (thin) film may comprise magnesium fluoride and/or cryolite.

A multiple layered coating may comprise a (thin) film stack having two, three, four or more layers. With two layers, the outer layer suitably has an index of refraction lower than an inner layer (which may thus be sandwiched between the outer layer and an optically transparent element). A preferred example may have magnesium fluoride comprising the outer layer and silicon monoxide comprising the inner layer. Similarly, three and four (thin) film layers having varying indices of refraction and thicknesses may be provided which may comprise various metal oxides or other suitable materials.

In the case of the gradient refractive index film, such a film may be provided on the front, or on both the front and rear surfaces of the front element (e.g. a substrate panel) and may be formed in various ways. For example, the surface may be a leached layer having an index of refraction intermediate between those of air and the transparent element, e.g. soda lime glass. Alternatively, the layer may be a porous, (e.g. skeletonised) surface coating formed from a dispersion comprising a solution of at least one metallo-organic compound and at least one organic polymer, the dispersion being heated after application to the substrate to drive off the solvent, the organic components and the organic polymer thus leaving an inorganic oxide film. In addition, the gradient refractive index layer may be induced on the element surface by argon ion implantation.

In some embodiments of the invention, the front element (or substrate) may be in the form of a laminate assembly comprising a plurality of (e.g. a pair of) optically transparent layers or panels adhered to one another. This may be by a (highly) light transmitting interlayer. The interlayer may be a polymer layer or a highly transparent, adhesive layer having a moderate to low modulus of elasticity. The refractive index of the interlayer is suitably close to that of the optically transparent panels laminated thereby. Further, the laminate front element may have ultraviolet radiation reducing means for reducing ultraviolet radiation degradation of the electrochromic and/or electrochemichromic medium in the assembly. The same anti-reflective means previously mentioned which include optical (thin) films, multiple layer coatings, and gradient refractive index films described above may be provided on the front surface of the laminate (front) assembly to provide the anti-reflective effects desired in the invention.

The invention may thus provide significant glare and double image reducing advantages for all types of electrochromic and/or electrochemichromic rearview mirror assemblies including those using flat, curved or convex, or multi-radius glass, for use both inside or outside vehicles. The invention may also be used on glass of varying thicknesses and composition thus offering improvements in weight or mirror cases. In addition, the invention can be used with a variety of sizes and shapes which may be cut from the anti-reflective glass. Furthermore, the invention may be equally useful in electrochromic and/or electrochemichromic assemblies having a single front substrate or a laminate front element. Moreover, should it be desired not to dim below a certain level (such as 4%) of the incident light intensity, the anti-reflecting layer(s) used in the present invention may allow the use of a smaller amount of the electrochemichromic medium or material, which may provide more efficient and more economical assemblies even though the mirror will continue to dim to the desired degree of darkness.

According to a second aspect of the present invention there is provided a process for the preparation of a mirror assembly of the first aspect, the method comprising:

providing spacing apart a first and second element, at least the first element being optically transparent, each element having a front and rear surface so that a space is defined between the rear surface of the first element and the front surface of the second element;

containing an electrochromic and/or electrochemichromic medium in the space, when the light transmittance of the medium is variable upon the variation and/or application of any electric field thereto;

providing means for applying an electric field to the electrochromic and/or electrochemichromic medium to allow variation in the light transmittance of the medium;

forming a reflective coating on one surface of the second element so that it is adapted to reflect light incident thereon through both the first element and the electrochromic and/or electrochemichromic medium; and

forming anti-reflective means on the front surface of the first element.

Preferably the first element is a laminate. The laminate suitably comprises a plurality of optically transparent layers (or panels) which are usually made of glass. The reflective coating and anti-reflective means are suitably provided on different layers or panels in the laminate. Thus, the process may additionally comprise forming an electrically conductive coating on one of the layers or panels (to serve as means for applying the electric field to the medium) and forming the anti-reflective means on a different layer or panel. By this process, one may avoid damaging or altering either of the electrically conductive coating or anti-reflective means since they are formed separately on different layers or panels.

Preferred features and characteristics of the second aspect are as for the first *mutatis mutandis.*

The invention will now be described with reference to the accompanying drawings and Examples which are provided by way of illustration and are not to be construed as being limiting. In the drawings:

Figure 1 is a side section of a conventionally known, prior art electro-optic rearview mirror assembly illustrating typical principal and first surface reflected images;

Figure 2 is a side section of a first embodiment of a (reduced first surface reflectivity) electrochromic or electrochemichromic rearview mirror assembly according to the present invention incorporating an anti-reflective coating;

Figure 3 is a side section of a second embodiment of a (reduced first surface reflectivity) electrochromic or electrochemichromic rearview mirror assembly according to the present invention having a laminate front glass element on which is an anti-reflective coating;

Figure 4 is a fragmentary section of a portion of an outermost substrate element of a mirror, according to the present invention which incorporates a double layer thin film stack;

Figure 5 is a fragmentary section of a portion of an outermost substrate element of a mirror according to the present invention which incorporates a triple layer (thin) film stack;

Figure 6 is a fragmentary section of a portion of an outermost substrate element of a mirror according to the present invention which incorporates a four layer (thin) film stack;

Figure 7 is a graph of first surface reflection against wavelength of conventional (prior art) soda lime glass in the visible spectrum for light incident in air at 22.5° to the front surface of a glass element, measured with a photopic detector;

Figure 8 is a graph of first surface reflection against wavelength in the visible spectrum for soda lime glass coated with a single layer of anti-reflective coating of magnesium fluoride for light incident in air at 22.5° to a front surface of an element;

Figure 9 is a graph of first surface reflection against wavelength in the visible spectrum of a commercially available, anti-reflective coated soda lime glass element from OCLI, Inc. for light incident in air at 22.5° to the front surface of the element prior to any exposure to heat treatment;

Figure 10 is a graph of first surface reflection against wavelength of a commercially available anti-reflective coated soda lime glass substrate from OCLI, Inc. following heat treatment in a reducing atmosphere at 450° C. for several hours during which the opposite side of the substrate was being coated with indium-tin oxide;

Figure 11 is a graph of first surface reflection against wavelength in the visible spectrum for soda lime glass coated with a double layer anti-reflective (thin) film stack of magnesium fluoride and silicon monoxide for light incident in air at 22.5° to the front surface of the coated element;

Figure 12 is a graph of first surface reflection against wavelength in the visible spectrum for soda lime glass coated with a triple layer (thin) film stack including magnesium fluoride, zirconium oxide and lanthanum oxide for light incident in air at 22.5° to the front surface of the coated element; and

Figure 13 is a graph of first surface reflection against wavelength of a triple layer (thin) film stack on soda lime glass wherein the layers are the same as those employed for Figure 12 and the light is incident in air at 22.5° to the front surface but where the indices of refraction for each layer are increased by 0.1, which could occur in heat treatment during the application of an ITO or similar coating.

Referring now to the drawings in greater detail, Figure 2 illustrates a first embodiment of a laminate, electrochromic and/or electrochemichromic rearview mirror assembly 30 having a front element 32 which has an anti-reflective, optical (thin) film 34 on its front or first surface which may provide improved glare reducing and double image reducing benefits. The front element or substrate panel 32 is a generally planar sheet of conventional soda lime window glass, as is second glass substrate panel or element 36 which is spaced rearwardly from the front glass panel 32 to define a gap or space 38 for receiving an electrochemichromic medium 40 as will be further explained. The front element 32 includes generally parallel front and rear surfaces 31, 33 although the element may be flat, curved or convex, or incorporate a multi-radius curvature. Likewise, rear element 36 includes generally parallel front and rear surfaces 35, 37. As will be explained, elements 32, 36 may also be resinous, polymeric sheets which not only may prevent fragment scattering or lacerative injuries if broken but also may reduce weight.

The gap or space 38 is thus formed between rear surface 33 of front glass element 32 and forward facing surface 37 of rear glass element 36. Preferably the front and rear surfaces 33, 37 are parallel and each is coated with a layer 33a, 37a of indium-tin oxide (ITO) which is substantially transparent to incident visible light yet is sufficiently electrically conductive to enable application of an electric field or voltage across space 38 between the ITO layers. Electrical energy is provided by wire leads 42, 44 secured in any one of several ways to the ITO coatings 33a, 37a as shown in Figure 2 (also described in U.S. patent application Serial No. 07/454,398, filed December 22, 1989).

The rear surface 35 of the glass panel 36 is preferably coated with a reflective layer 46 of metallic material such as aluminium, or a combination of silver and copper, or a suitable conventional material. However, layer 46 may be applied to front surface 37 of element 36 in place of ITO coating 37a in which case the layer 46 may then double as an electrically conductive coating. In either case, the layer 46 provides a highly specular surface which reflects approximately 80 to 90% of the light incident thereon through layer 34, front and rear glass elements 32, 36, and electrochemichromic medium 40 in the space or gap 38 as has been described. A layer 48 of tape or a plastisol-type plastic adhesive, typically about 0.1 millimetre thick, may be applied to the rear surface of reflective coating 46 to prevent scattering of glass fragments from the rear glass element in the event of breakage or damage during a collision in a vehicle. Layer 48 may be opaque, translucent or transparent since it is behind reflective coating 46 and need not transmit or reflect any light.

In order to confine and retain the electrochromic and/or electrochemichromic medium 40 in the gap 38, a peripheral seal 50, formed from an epoxy material which adheres well to the ITO coatings 33a, 37a, is applied adjacent the periphery of the glass panels 32, 36. A suitable epoxy sealing material is EPON 828TM from Shell Chemical Company of Houston, Texas, cured by polyamide based curing agents such as V-40TM from Miller Stephenson Company of Danbury, Connecticut. The epoxy is preferably silk-screened onto the ITO coated surface 33a of front glass element 32, or the ITO coated rear surface 37a of rear glass element 36, or onto both glass elements. The corresponding glass panel is then placed face-to-face with the still tacky epoxy. Seal 50 is then fully cured, typically by placing the assembly in an oven at 110° C. for three hours. Gap 38 can then be filled by a variety of means such as a simple injection of electrochemichromically active material using a syringe.

Assembly 30 is preferably incorporated in a moulded thermoplastic or other mirror case 52 of conventional form and supported within a vehicle in a conventionally known manner through an articulated support from the inside windshield surface or from a header mounted support arm (not shown). Alternatively, the assembly may be mounted on a backing support and secured within an exterior housing for use as an outside mirror in vehicles.

Typically, glass panels 32, 36 will each be approximately 2 millimetres in thickness (within the range of about 0.06 to 0.09 inches) while ITO coatings 33a, 37a will have a typical thickness of 1500 angstroms. Reflective coating 46 may have a thickness within the range of between 500 and 1000 angstroms. Gap 38 is typically within the range of 50 to 200 microns for electrochromic and/or electrochemichromic mirrors, and may contain a liquid, thickened liquid, gel or semi-solid material such as the formulations described in U.S. Patent No. 3,506,229 to Schoot et al. Alternatively, in electrochromic mirrors, a material such as poly-AMPS™ available from Lubrizol Corp. of Wickliffe, Ohio may be used. For these, a liquid, thickened liquid, gel or semi-solid material may also be used as is conventionally known. Application of an electric field will cause media 40 to colour to successively darker colours or shades as larger voltages are applied. When the voltage is turned off or reversed, the colouring is bleached allowing full transmittance of light and, hence, full reflectivity from reflective layer 46.

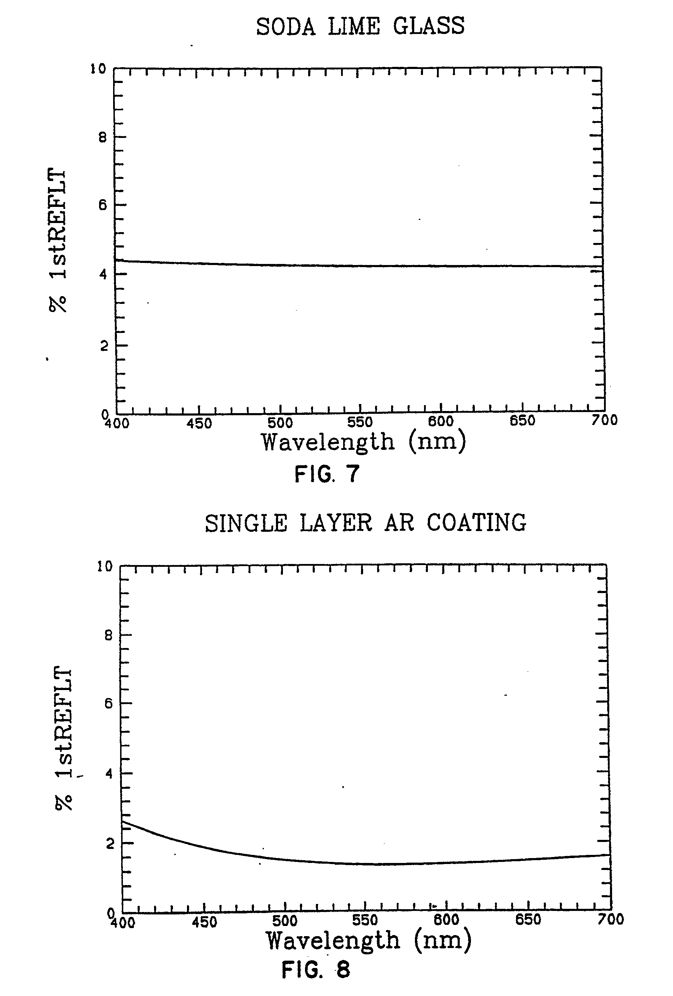

Preferably, anti-reflective layer or coating (AR) 34 is an optical thin film such as a thin layer of magnesium fluoride ($MgF_2$) having a refractive index of about 1.38 at 600 nm and deposited at a thickness of about 1075 angstroms onto the planar front surface 31 of glass panel 32. When light is incident in air on the front surface of such coated glass at 22.5°, which is typical for standard measurement of reflection from rearview mirrors under SAEJ964a, the reflectivity FR of the coated surface is 1.4% of the incident light as viewed by the human eye as shown in Figure 8. When contrasted with the uncoated soda lime glass as shown in Figure 7, when light is incident in air at the same angle, the first surface reflection FR is approximately 4.2% of the incident light intensity. The reflectivity for such a single layer may be calculated using the following equation where $n_1$ is the refractive index of the anti-reflective coating layer, $t_1$ is the thickness of such layer, and $n_s$ is the refractive index of the substrate glass. When $n_1.t_1$ = lambda/4, 3xlambda/4, 5xlambda/4, etc., the reflectivity is either a maximum or minimum at wavelength and is given by

$$R = \left[ \frac{n_1^2 - n_o n_s}{n_1^2 + n_o n_s} \right]^2$$

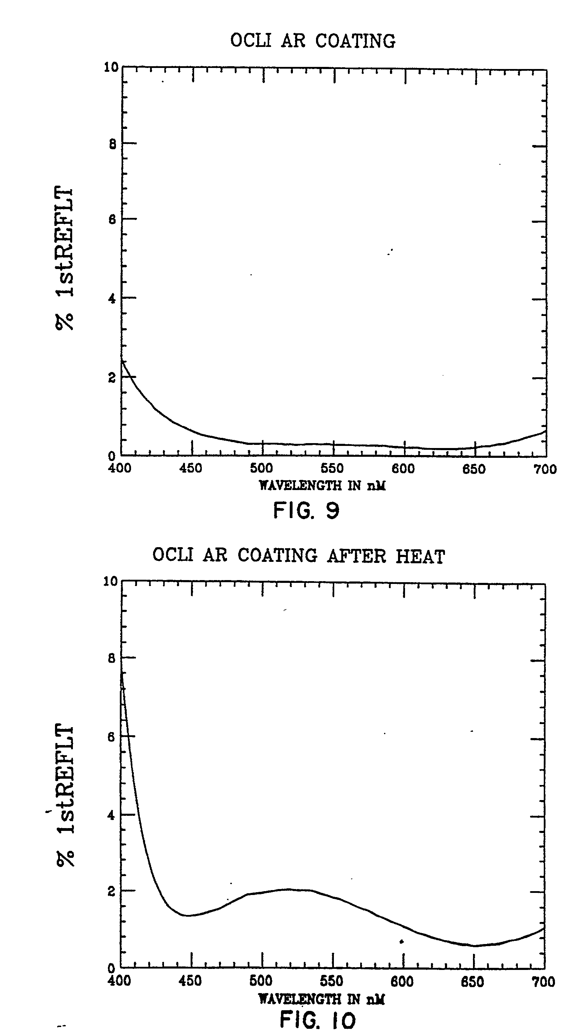

The above measurements of integrated reflectivity from the data in Figures 7 and 8, as well as those in Figures 9 to 13, were taken using Standard Illuminant A and a photopic detector. For a single layer anti-reflective coating whose reflectance is governed by the above equation, reflectivity is 0 if:

$$n_1 = \sqrt{n_o n_s}$$

For soda lime glass, this requires $n_1$ to be 1.23. Coatings favourably approaching such a refractive index besides magnesium fluoride include (thin) cryolite ($Na_3AlF_6$) coating, with a refractive index of 1.35 at 600 nm. However, magnesium fluoride ($MgF_2$) is preferred due to its good physical durability making it useful on the exposed front surface of a rearview mirror assembly.

Alternatively, in place of the above single layer anti-reflective coatings, glass which has already been anti-reflection coated commercially may be used in the glass under the trade mark HEA is available from OCLI, Inc. of Santa Rosa, California. Such coated glass, as shown in Figure 9, has an average front surface reflection of 0.3% when viewed by the human eye for light incident in air from Standard Illuminant A as measured with a photopic detector at 22.5°. Likewise, anti-reflective glass manufactured by the dip/fire sol-gel process by Denton Vacuum Inc. of Cherry Hill, New Jersey under the trade mark DENGLAS can be used. Such dip/fire coated glass is conveniently supplied anti-reflection coated on both sides of the substrate. Also anti-reflective glass manufactured by Evaporated Metal Films of Ithica, New York under the trade mark MLAR can be used. Anti-reflective glass manufactured by LOF Inc. of Brackenridge, Pennsylvania under the trade mark SLR may be employed. Front glass panel 32 may be cut from such coated glass and, thereafter, provided with a transparent electrically conductive coating on its opposite surface and assembled into assembly 30. Alternatively, the glass may be cut and assembled as a laminate front glass element as will be described more fully below in connection with Figure 3. The commercial availability of such glass, which can be easily cut for use in such assemblies, considerably lessens the expense of these assemblies.

Through use of an anti-reflective coating such as that at 34 in embodiment 30, the first surface reflectance FR can be made now small, e.g., about 0.5% of the incident light $I_o$, while the overall electrochemichromic mirror assembly can now potentially dim to as low as 0.5% of the incident light. Also, because the front surface reflection FR may now be weak, any double imaging between FR and R or R' is significantly less noticeable and of minimal concern.

## EXAMPLE

Two equivalent electrochemichromic cells were constructed, one incorporating plain 0.063 inch thickness soda lime glass as the front element 32 while another using 0.087 inch glass having a commercially available, HEA™ anti-reflective coating from OCLI, Inc. (as mentioned before) was used. The reflectance performance of the anti-reflective coated glass, after heat treating during coating with ITO as a transparent electrically conductive coating was modified because of such processing and is shown in Figure 10.

Specifically, before coating with ITO, the first surface reflectance of the OCLI HEA™ anti-reflective coated glass as shown in Figure 9 was about 0.3% of the incident light from Standard Illuminant A as viewed with the human eye. However, application of the ITO coating requires heat treatment in a reducing atmosphere at high temperature. Typically, such treatment requires soaking for several hours at approximately 450° C. in a reducing atmosphere which changes the thin film stack already applied to the glass when purchased. Thus, after such treatment, first surface reflection had risen to 1.4% of the incident light (Figure 10).

In the samples tested, the second glass substrate panels 36 were 0.063 inch clear soda lime glass. The transparent conductors 33a, 37a were 1500 angstrom ITO coatings of sheet resistance at 15 ohms/square in the conventional sample and 3000 angstroms of sheet resistance at 10 ohms/square in the anti-reflective coated sample. The epoxy resin seal 50 of 150 microns thickness was used in each sample. The rear reflective coating 46 in each case was silver. The cell space 38 in each sample was filled with an electrochemichromic solution comprising 0.05 molar benzylviologen tetrafluoroborate, 0.05 molar 5,10-dihydro-5,10-dimethylphenazine, and 0.05 molar tetrabutylammonium tetrafluoroborate dissolved in propylene carbonate. As shown in Table A, the optical performance of the two sample mirrors, as made in accordance with the above, differed significantly.

## TABLE A

Comparison of anti-reflection coated electrochemichromic device to a conventional electrochemichromic device

| | Zero V applied | 1.2 V applied |
|---|---|---|
| | High Reflectance State | Low (dimmed) Reflectance State |
| Conventional | 76% $I_O$ | 5.2% $I_O$ |
| Anti-reflective coated | 71.5% $I_O$ | 2.1% $I_O$ |

As shown in Table A, when 1.2 volts is applied across conductive leads 42, 44, the electrochemichromic medium 40 is coloured dark and the mirror assembly reflects approximately 5.2 % of the incident light (Standard Illuminant A) comprising about 4.2 % from front surface FR reflection and 1% due to reflection from reflective layer 46 and any secondary reflections. However, in the anti-reflective coated assembly, total reflectivity measured 2.1% of the incident light comprising only about 1.4% reflectivity from the front surface FR adding to less than 1% reflectivity from the rear reflective layer 46 and any secondary reflections. In addition, double imaging due to front surface reflection was noticeably and beneficially reduced in the anti-reflective coated assembly.

A second form of the reduced reflectivity rearview mirror assembly is shown at 60 in Figure 3 where like numerals indicate like parts to those of embodiment 30. The principal difference between embodiments 30 and 60 is that a multi-substrate, laminate first element 62 is substituted for the single glass substrate panel 32 of embodiment 30. In embodiment 60, front laminate glass assembly 62 has a front or first glass element 62a with generally parallel front and rear surfaces, adhered to an intermediate glass element 62b, also having parallel front and rear surfaces, preferably by an interlayer 62c of a polymeric substance such as polyvinylbutyral (PVB) commercial laminating sheeting or a highly optically transparent adhesive layer having a moderate to low modulus of elasticity and an index of refraction closely matched to that of the elements/panels laminated thereby (as discussed in U.S. patent application Serial No. 07/464,888). Layer 62c is adhered to rear surface 64 of front glass panel 62a and front surface 65 of glass panel 62b by heat and pressure when PVB laminating sheeting is used such as with a conventionally known autoclave method or the like. Glass panels 62a, 62b may be conventional soda lime window glass as in embodiment 30. The rear surface 67 of glass element 62b is coated with an ITO coating layer 33a just as in embodiment 30. However, as explained below, by avoiding heat treatment during coating of the anti-reflective coated, front glass element 62a with ITO, improved anti-reflective characteristics are provided.

ITO coated rear surface 67 of glass panel 62b is, in turn, sealed with the front ITO coated surface 37a of rear glass panel 36 by epoxy resin seal 50 as described above to provide gap 38. Front glass panel 62a also includes a single layer, anti-reflective coating of magnesium fluoride, (thin) cryolite, or commercially available HEA™ or DENGLAS™ coatings from OCLI, Inc. or Denton Vacuum Inc. as described previously in embodiment 30.

The inclusion of a laminate front glass assembly 62 may provide significant safety advantages protecting vehicle occupants from injury due to scattered shards of glass and fragments should an accident occur. In addition, as described in U.S. Patent Application Serial No. 07/464,888, the front glass assembly may provide ultraviolet radiation reducing benefits such as UV reducing coatings on the front surface 63 of the assembly, UV reducers/absorbers incorporated in or made a part of interlayer 62c or as part of the glass panels or elements themselves. When using such a laminate front assembly 62, the chances for misalignment of the anti-reflective coated front surface 63 with the rear coated reflective layer 46 are increased through the various manufacturing/assembly processes. Thus, in an uncoated, nonanti-reflective treated electrochemichromic rearview mirror assembly, double imaging could be significantly pronounced as compared with the present invention. Therefore, electrochemichromic assemblies using laminate front glass elements may be significantly more commercially feasible and acceptable when including the anti-reflective coatings or layers of the present invention.

Use of a laminated front element in assembly 60 has yet another advantage. As described above, many commercially available and other anti-reflective coatings are highly vulnerable to heat treatment. Such treatment can cause changes in the refractive index of such layers and can degrade their anti-reflective performance. Even small refractive index changes can significantly degrade anti-reflective performance. Small changes in both the index of refraction and thickness of an anti-reflective coating are possible when such coatings are heated, particularly at high temperatures such as 450° C. in a reducing atmosphere for several hours as is common in the coating and curing of a transparent electrically conductive film such as ITO. Yet, it is often most convenient to purchase commercially available, anti-reflective coated glass and then apply transparent electrically conductive coatings thereto on the opposite surfaces. On the other hand, if one applies transparent electrically conductive coatings to glass and then applies anti-reflective coatings to other surfaces of such glass, the deposition conditions involved in applying the anti-reflective layers can also degrade the conductivity of the existing transparent electrically conductive coatings. Use of a laminate front element in embodiment 60 of Figure 3 eliminates this problem because the front glass panel 62a can be anti-reflective coated separately from the second or intermediate ITO coated glass panel or element 62b. When separately formed and thereafter assembled via lamination or the like, both panels can be used in their optimum performance conditions eliminating either reduced electrical performance or reduced anti-reflective performance.

As an example of such optimum performance, an anti-reflective, coated glass element bearing a commercially available OCLI HEA™ coating as described above in connection with Table A but without any prior heat treatment was laminated to the uncoated front surface of a rear ITO coated glass piece such as 62b in Figure 3. Lamination was made using low modulus, optically matching UV curing, polyurethane adhesive available from Norland Products Inc. of New Brunswick, New Jersey under the trade mark NORLAND OPTICAL ADHESIVE 65. When measured, the assembly incorporating this laminated front piece had an undimmed reflectivity of 77.5% of the incident light, yet dimmed to a very low reflectivity of only 1.9% of the incident light when 1.2 volts were applied.

Alternatively, excellent anti-reflective performance can be obtained with either rearview mirror embodiment 30 or 60 by substituting multiple layer anti-reflective coatings to achieve a lower reflectivity over a wider spectral region than is achievable using single layer coatings such as magnesium fluoride or thin cryolite.

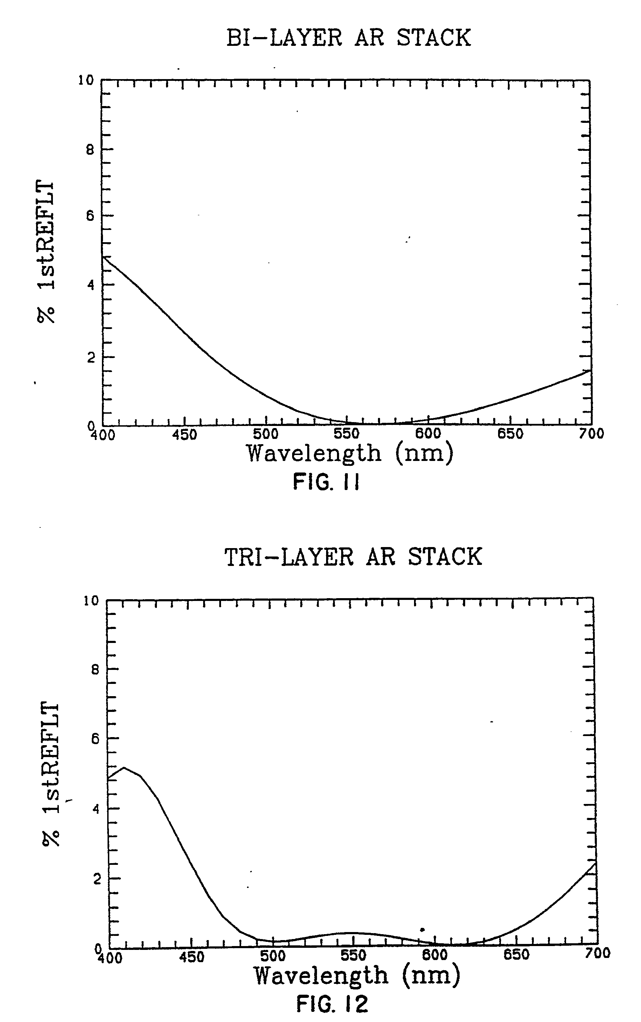

With reference to Figures 4 and 11, a double layer anti-reflective (AR) (thin) film stack may be provided using two, quarter wavelength coatings 70, 72 where, for zero reflection,

$$\frac{n_2}{n_1} = \left(\frac{n_s}{n_o}\right)^{\frac{1}{2}}$$

where $n_1$ and $n_2$ are the indices of refractions of the lower index, outermost layer ($n_1$) and the higher index, innermost layer ($n_2$) in the stack. As shown in Figure 4, a double layer of coatings may be provided on the front surface of glass substrate panel 32 or 62a. The outermost layer 72 may comprise a 1068 angstrom magnesium fluoride ($MgF_2$) layer having a refractive index of 1.38. The innermost layer 70 is an 867 angstrom silicon monoxide ($SiO_x$) layer of refractive index of 1.7 deposited onto soda lime glass. First surface reflection FR for such coated glass when viewed with the human eye is reduced to about 0.25% of the incident light as shown in Figure 11. Overall, an electrochromic/electrochemichromic rearview mirror assembly incorporating such double layer coated glass is capable of a total reflectivity of approximately 1% of the incident light when the electrochromic/electrochemichromic medium is fully and completely dimmed.

As shown in Figures 5 and 12, triple layer thin film stacks are also useful in the present invention. One such stack is taught in US-A-3,185,020 (Thelen). In such stack, the first or outer layer 80 has an optical thickness of one-quarter wavelength of the design wavelength (about 560 nm for a rearview mirror), the second or middle layer 82 has an optical thickness of one-half wavelength, while the third or inner layer 84 has an optical thickness of one-quarter wavelength. The first, second and third layers 80, 82 and 84 are formed from three different materials having different indices of refraction, namely, $n_1$, $n_2$ and $n_3$, respectively. To assure good anti-reflecting performance, such indices are chosen so that:

$$n_1{}^2 = \frac{n_3{}^2}{n_s}$$

where $n_s$ is the index of refraction of the substrate glass. Moreover, the index of refraction of the second layer 82 ($n_2$) should be in the region of about 1.9 to 2.3 for an index of refraction for the substrate within the range of between 1.45 to 1.75. Of course, soda lime glass lies within such range at 1.52. Magnesium fluoride ($MgF_2$) is a suitable material for the outermost layer 80 ($n_1$) and has a low index of 1.38. The middle or second layer 82 has a high refractive index and can be chosen from zirconium oxide ($ZrO_2$), neodymium oxide ($Nd_2O_3$), tantalum oxide ($Ta_2O_5$), indium oxide ($In_2O_3$), titanium dioxide ($TiO_2$) and certain mixed oxides. The innermost layer 84 is of medium index of refraction between 1.8 and 1.85 and may consist of cerium fluoride ($CeF_2$), silicon oxide (SiO), lanthanum oxide ($La_2O_3$), thorium oxide ($ThO_2$) and/or neodymium fluoride ($NdF_3$). Preferably, for soda lime glass, use of magnesium fluoride having an index of 1.38 for layer 80, zirconium oxide having an index of 1.95 for the layer 82, and lanthanum oxide having an index of 1.84 for the layer 84 is particularly satisfactory. A physical thickness of around 1014 angstroms for layer 80, 2200 angstroms for layer 82, and 761 angstroms for layer 84 is particularly satisfactory. Such a triple layer anti-reflection coating has an integrated first surface reflectance below about 0.5% of the incident light as shown in Figure 12.

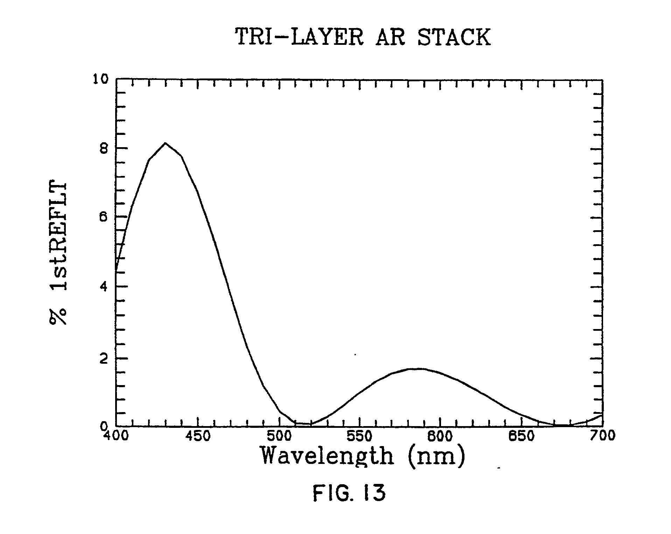

With reference to Figure 13, the reflectance performance of a similar triple layer thin film stack having indices of refraction artificially increased by only 0.1 in each layer while thicknesses remain the same is shown. The integrated reflectance increases from the original 0.25% of incident light to 1.14% of the incident light due to these small index changes. Such changes could occur through heating as in the process for applying ITO coatings. Therefore, use of laminated front glass assemblies such as that shown at 62 in embodiment 60 may significantly increase anti-reflective performance when such processing is avoided. It is also possible to use four or more layered anti-reflective coatings in the assemblies of the present invention. A four layer coating is described, for example, in US-A-No. 3,432,225 (Rock). As described in that patent, such a four layer coating consists as shown in Figure 6, when counting from the air side, of a quarter wavelength low index layer 90 such as magnesium fluoride ($MgF_2$), a half wavelength high index layer 92 such as zirconium oxide ($ZrO_2$), and two thin layers 94, 96 used to synthesise a layer having an optical thickness of one-quarter wavelength of intermediate refractive index. This is achieved by depositing layer 96 of a high index material such as zirconium oxide to an optical thickness substantially less than one-quarter wavelength of the design wavelength for the anti-reflection coating onto the soda lime glass substrate, followed by another layer 94 of a material such as magnesium fluoride having a low index of refraction to a thickness also substantially less than one-quarter of the design wavelength. The effect achieved by these two thin layers is a layer of intermediate index of refraction between 1.45 and 1.76 and having an optical thickness of one-quarter of the design wavelength. Suitable four layer anti-reflective coatings of specific designs are discussed in US-A-3,781,090 (Sumita).

As an alternative to the deposition of thin film coatings onto a glass surface to reduce reflection from that surface, a refractive index gradient can be provided at the surface. Numerous techniques may be used such as those disclosed in an article entitled "Integral anti-reflection films for glasses: a review" by Ford et al., Glass Technology, Volume 26, No. 2 (April 1985), pages 104-107. Such anti-reflecting surfaces are generally produced by some form of acid etching technique, using strong mineral acids such as a solution of $NH_4F.HF$ and $HNO_3$, and generally consist of a surface leached layer of intermediate index of refraction between that of air and the bulk glass. Frequently, the anti-reflective gradient index layer is a porous silica-rich region with a refractive index of between about 1.35 and 1.45.

For example, Minot, in an article published in the Journal of the Optical Society of America, Volume 66, No. 6 (June 1976) page 515, describes single layer, gradient refractive index films effective in the wavelength region from 0.35 to 2.5 microns in thickness produced by first heat treating borosilicate glasses to effect a phase separation into a relatively insoluble silica-rich phase and into a soluble low silica content phase. The soluble phase is subsequently readily dissolved by a variety of means, including most of the mineral acids, leaving the high silica content phase as a porous, skeletonised, anti-reflecting surface film of lowered, refractive index compared to that of the bulk glass.

Alternatively, Thomas in US-A-4,446,171 describes a porous skeletonised surface coating imparted to a glass substrate by a sol-gel process including dip application of a thin, anti-reflective coating by providing a dispersion containing at least one metallo-organic compound and at least one organic polymer in a solvent, followed by heating such that the solvent, the organic polymer, and the organic components are driven off leaving a surface coating as an inorganic oxide film having a relatively low refractive index.

Alternately, anti-reflective layers can be induced on soda lime glass by argon ion implantation as described by F. Geotti-Mianchini et al. in the Journal of the American Ceramic Society, Volume 67, No. 1 (January 1984) pages 39-42. Selection of a particular anti-reflecting coating or layer, thin film coating, selective surface etch, ion implantation or dip/heating technique in the present invention is made by the performance required, the cost target sought, and the degree of durability desired.

In the dip and heating process, the glass elements or panels are immersed in a mineral acid solution such that both surfaces of a glass sheet, such as surfaces 31 and 33 in embodiment 30, are simultaneously and beneficially anti-reflection coated. The broad band reflectance of two surfaces is effectively reduced from about 8% to less than 0.5% of the incident light.

As will also be apparent, the anti-reflective layers described above can be deposited either on flat or curved glass thus enabling use on all types of mirrors, both inside and exterior vehicular mirrors, including flat, convex or multi-radius mirrors. Also, the glass substrates can be made as thin as desired to decrease weight or reduce the size of necessary mirror cases or other packaging. Also, the sizes and shapes of mirrors incorporating the anti-reflective coatings or layers of the present invention can be cut from commercially available, anti-reflective coated glass sheet to reduce expense.

## Claims

1. An electrochromic and/ir electrochemichromic mirror assembly comprising:

   first and second spaced apart elements, at least the first element being optically transparent, each element having a front and rear surface so defining a space between the rear surface of the first element and the front surface of the second element;

   an electrochromic and/or electrochemichromic medium contained in the space whose light transmittance is variable upon the variation and/or application of any electric field applied thereto;

   means for applying an electric field to the electrochromic and/or electrochemichromic medium to allow variation in the light transmittance of the medium;

   one surface of the second element having a reflective coating adapted to reflect light incident thereon through both the first element and the electrochromic and/or electrochemichromic medium; and

   anti-reflective means being provided on the front surface of the first element.

2. A mirror assembly as claimed in claim 1 wherein the anti-reflective means comprises one or more films, coatings or layers.

3. A mirror assembly as claimed in claim 1 or 2 wherein the first element comprises soda lime glass and the anti-reflective means includes a layer comprising magnesium fluoride ($MgF_2$) and/or cryolite ($Na_3AlF_6$).

4. A mirror assembly as claimed in any of claims 1 to 3 wherein the anti-reflective means comprises layers, a first, outer layer having an index of refraction lower than a second, inner layer.

5. A mirror assembly as claimed in claim 4 wherein the first, outer layer comprises magnesium fluoride ($MgF_2$) and the second, inner layer comprises silicon monoxide ($SiO_x$).

6. A mirror assembly as claimed in any of claims 1 to 3 wherein the anti-reflective means comprises three layers, a first layer comprising magnesium fluoride ($MgF_2$), a second layer comprising zirconium oxide ($ZrO_2$), neodymium oxide ($Nd_2O_3$), tantalum oxide ($Ta_2O_5$), indium oxide ($In_2O_3$) and/or titanium dioxide ($TiO_2$), a third layer comprising cerium fluoride ($CeF_2$), silicon oxide ($SiO$), lanthanum oxide ($La_2O_3$), thorium oxide ($ThO_2$) and/or neodymium fluoride ($NdF_3$).

7.  A mirror assembly as claimed in any of claims 1 to 6 wherein the anti-reflective means comprises four layer, a first and third layer comprising magnesium fluoride ($MgF_2$) and a second and fourth layer comprising zirconium oxide ($ZrO_2$).

8.  A mirror assembly as claimed in any of claims 1 to 7 wherein the anti-reflective means comprises a surface leached layer having an index of refraction between that of air and soda lime glass.

9.  A mirror assembly as claimed in any of claims 1 to 8 wherein the first element is a laminate.

10. A mirror assembly as claimed in claim 9 wherein the laminate comprises a plurality of optically transparent panels adhered to one another by a light transmitting intermediate-layer.

FIG. I
(PRIOR ART)

FIG. 2

FIG. 3

FIG. 4

FIG. 5

FIG. 6

## SODA LIME GLASS

FIG. 7

## SINGLE LAYER AR COATING

FIG. 8

OCLI AR COATING

FIG. 9

OCLI AR COATING AFTER HEAT

FIG. 10

17

## BI-LAYER AR STACK

FIG. II

## TRI-LAYER AR STACK

FIG. 12

## TRI-LAYER AR STACK

FIG. 13